Europäisches Patentamt

European Patent Office

Office européen des brevets

(11) Veröffentlichungsnummer: **0 257 664**
A1

# EUROPÄISCHE PATENTANMELDUNG

(21) Anmeldenummer: 87201027.7

(22) Anmeldetag: 12.10.84

(51) Int. Cl.⁴: **F 16 B 23/00**, B 25 B 15/00, F 16 B 25/00, F 16 B 37/14

(30) Priorität: 14.10.83 DE 3337534
14.10.83 DE 3337535

(43) Veröffentlichungstag der Anmeldung: 02.03.88
Patentblatt 88/9

(84) Benannte Vertragsstaaten: AT BE CH DE FR GB IT LI NL SE

(60) Veröffentlichungsnummer der früheren Anmeldung nach Art. 76 EPÜ: 0142037

(71) Anmelder: Knoche, Alfons, Overbergstrasse 7, D-5758 Fröndenberg (DE)

(72) Erfinder: Knoche, Alfons, Overbergstrasse 7, D-5758 Fröndenberg (DE)

(74) Vertreter: Wasmeier, Alfons, Dipl.-Ing. et al, Postfach 382 Greflingerstrasse 7, D-8400 Regensburg (DE)

(54) Innenantrieb, Abdeckkappe und Schraubendreher für eine Universalschraube.

(57) Eine selbstformende Universalschraube weist eine etwa zylindrische Segmentbohrung (207) auf, die durch Flügel und Stege (206, 208) unterbrochen und von radial inneren, teilkreisförmigen Abschnitten (209) gebildet ist; die Flügel (206) sind in einem oberen Bereich konisch von aussen oben nach unten innen ausgebildet und die Stege (208) in einem unteren, daran anschliessenden Bereich senkrecht bzw. im Winkel konisch von aussen oben nach innen unten zur Segmentbohrung (207) verlaufend ausgebildet.

K/p 12.444 E (Ausscheidung)     0257664

Patentansprüche:

1. Selbstbohrende und/oder selbstformende Universalschraube mit einem konischen Öffnungswinkel für den Innenantrieb, z.B. Kreuzschlitz, mit radialen Stegen und Flügeln zur Aufnahme eines Schraubendrehers und Paarungseffekt zwischen Schraubendreher und Schraube, **dadurch gekennzeichnet**, daß eine im wesentlichen zylindrische Segmentbohrung (207) durch die Flügel und Stege (206, 208) unterbrochen und von den radial inneren, teilkreisförmigen Abschnitten (209) gebildet ist, und daß die Flügel (206) in einem oberen Bereich konisch von außen oben nach innen unten verlaufen und die Stege (208) in einem unteren, daran anschließenden Bereich senkrecht bzw. in einem Winkel konisch von außen oben nach innen unten zur Segmentbohrung (207) verlaufend ausgebildet sind.

2. Universalschraube nach Anspruch 1, dadurch gekennzeichnet, daß die Kegelform des Innenantriebes (204) nach unten in einen zylindrischen Ansatz (205) übergeht, der ebenfalls radiale Stege (206) und Flügel (208) aufweist.

3. Universalschraube nach Anspruch 1, dadurch gekennzeichnet, daß die Abschnitte (209) zwischen den radialen Stegen und Flügeln (206, 208) eine Vierkant-, Achtkant- oder ähnliche Vielkantform (210, 211, 212) aufweisen, wobei die Kreuzformausbildung eine Kreuzanfasung (213) aufweisen kann.

4. Universalschraube nach Anspruch 1, dadurch gekennzeichnet, daß unterhalb des Schraubenkopfes (201) ein Bund (202) bzw. eine Volumenvergrößerung angeformt, vorzugsweise angepreßt ist, dessen Außendurchmesser vorzugsweise dem Gewindeaußendurchmesser entspricht.

2

0257664

5. Universalschraube nach einem der Ansprüche 1 - 4, dadurch gekennzeichnet, daß eine im wesentlichen zylindrische Segmentbohrung (207) sich im Abstand (x) von der Schraubenkopfoberseite (201) in den Bund (202) über mehr als die Hälfte der Bundhöhe erstreckt.

6. Universalschraube nach einem der Ansprüche 1 - 5, dadurch gekennzeichnet, daß die von den Stegen und Flügeln (206, 208) gebildete Segmentbohrung (207) zur Aufnahme einer Kunststoffabdeckkappe (225) ausgebildet ist.

7. Schraubendreher zum Eindrehen von Schrauben nach einem der Ansprüche 1 - 6, bei dem die Teilung des Schraubendrehers dem Innenantrieb der Schraube angepaßt ist, dadurch gekennzeichnet, daß der Winkel der Kegelform (220) des Schraubendrehers (219) etwa 5% kleiner ist als der Winkel der Kegelform des Innenantriebes (204) der Schraube.

8. Schraubendreher nach Anspruch 7, dadurch gekennzeichnet, daß der Zapfen (222) im Bereich der Flügel bzw. Stege (223) in Umfangsrichtung verlaufende Ausnehmungen (224) nach Art von Außengewinden aufweist, und daß die zwischen den Ausnehmungen (224) liegenden Erhebungen in Form von Zähnen (224) ausgebildet sind.

9. Schraubendreher nach Anspruch 7 oder 8, dadurch gekennzeichnet, daß die Flügel oder Stege (223) unterschnitten sind (bei 221) und Trapezform aufweisen.

10. Universalschraube nach einem der Ansprüche 1 - 6, mit einer in die Kopflochbohrung einzusetzenden Abdeckkappe, dadurch gekennzeichnet, daß der Zapfen (226) der Abdeckkappe (225) hohl ausgebildet ist und/oder daß am Umfang des Zapfens (226) noppenartige Erhebungen, Umfangsringe oder dergl. Unstetigkeiten (228) vorgesehen sind bzw. der Zapfen (229) der Abdeckkappe (225) hohl ausgebildet ist und/oder etwa Tonnenform hat, bzw. daß der Zapfen (230) der Abdeckkappe (225) eine hinterschnittene Innenbohrung (231) besitzt.

11. Universalschraube nach Anspruch 10, dadurch gekennzeichnet, daß an dem Zapfen (229) Kreuzbalken (233) angeformt sind, die vorzugsweise geschlitzt (234) sind und gegenüber den Kreuzstegen bzw. Kreuzflügeln (206, 208) im Schraubenkopf ein Übermaß aufweisen.

Universalschraube                    0257664

Die Erfindung bezieht sich auf Universalschrauben mit den Merkmalen des Oberbegriffes des Anspruches 1.

Es sind eine Vielzahl von Innenantrieben im Schraubenkopf bekannt, z.B. die unterschiedlichen Kreuzschlitzformen, wellenförmige oder zahnradformähnliche Innenantriebe, Innensechskantformen, Schlitzausführungen und dergl. Am gebräuchlichsten sind die Kreuzschlitzformen, die den Vorteil bieten, daß die Schraubendreherklinge beim automatischen Verschrauben gut eingeführt wird. Hierbei müssen jedoch wesentliche Nachteile in Kauf genommen werden, insbes., daß keine senkrechten Angriffsflächen vorhanden sind und daß keine Flächenberührung beim Anziehen der Schraube auftritt. Der Hauptnachteil ist jedoch, daß eine Tendenz zum Heraustreiben der Schraubendreherklinge - bedingt durch die Keilwirkung - besteht, was die Ursache für den sogen. "cam-out-Effekt" ist.

Die Nachteile derartiger Formen sind deshalb insbes. darin zu sehen, daß durch den Anpreßdruck ein erhöhter Kraftaufwand beim Eindrehen der Schraube erforderlich ist, und daß durch das Ausmahlen des Kreuzschlitzes Kopf und Schraubenoberfläche beschädigt werden, so daß ein erhöhter Werkzeugverschleiß in Kauf genommen werden muß.

In der Praxis tritt nur eine Punktberührung zwischen den Kanten der Schraubendreherflügel und den Kanten der Schlitzwand im Schraubenkopf auf. Somit hängt der Widerstand gegen das Ab- bzw. Herausheben des Schraubendrehers von den Flächenkontakten und somit den Reibwiderständen zwischen den Kanten des Innenantriebs der Schraube und dem Schraubendreher ab.

Eine Kreuzschlitzform mit einem konischen Öffnungswinkel von 52° ist in seiner Konstruktion ideal, weil sie problemlos das Einschnäbeln des Schraubendrehers garantiert. Aufgrund dieser

0257664

konischen Form und der Geometrie der Mitnehmerflügel ergibt sich der vorerwähnte "cam-out-Effekt" bei Belastung bzw. bei Anwachsen des Drehmomentes. Diesem "cam-out-Effekt" kann nur durch erhöhten axialen Anpreßdruck entgegengewirkt werden, was an vielen Stellen nur sehr schwer möglich ist, z.B. über Kopfmontage und dergl. Für den Monteur ist die Forderung nach einem hohen axialen Anpreßdruck immer von Nachteil, da dies zu seiner vorzeitigen Ermüdung führt, und es ist stets ein erhöhter Werkzeugverschleiß zu erwarten. Eine derartige Kreuzschlitzform wird in der Praxis trotz ihrer Nachteile häufig und in großem Umfang verwendet.

In der Praxis hat sich mittlerweile ein neues Innenantriebssystem durchgesetzt, das in Aufsicht auf den Schraubenkopf gesehen wellenförmige oder zahnradförmige Flächen aufweist, die sich zu einem Kreis schließen (Torx). Dieses System hat wesentliche Bedeutung erlangt, weil hier senkrechte Angriffsflächen vorliegen. Bei diesem System wird als nachteilig empfunden, daß eine optimale Paarungsfindung zwischen Schraubendreher und Schraube, wie sie etwa beim Kreuzschlitz erhalten wird, nicht gegeben ist, und daß der "cam-out-Effekt" nicht vermieden wird.

Zum Stande der Technik wird auf die DE-PS 28 26 933 verwiesen, die eine Kreuzschlitz-Schraube betrifft, welche zur Aufnahme einer Abdeckkappe geeignet ist. Diese Kreuzschlitz-Schraube weist vier axial symmetrisch von der Schraubenkopf-Oberfläche ausgehende Einzelschlitze auf, an die sich eine koaxiale stumpfkegelige Vertiefung anschließt, wobei die beiden Seitenwandungen eines jeden Einzelschlitzes parallel zueinander verlaufen und zwischen jeweils peripherer einander benachbarten Einzelschlitzen radiale Ausprägungen vorgesehen sind. Diese Ausprägungen sind zur Achse der Schraube parallele Mantelflächen von Zylinderabschnitten, deren Zylinderachsen radial aus der Schraubenachse nach außen versetzt sind und deren seitliche Begrenzung durch eine scharfe Kante gegeben ist.

3    0257664

Aus der DE-PS 30 16 890 ist eine Schlitz-Schraube mit einer mittleren Vertiefung und vier radial um 90° gegeneinander versetzten Schlitzen, deren äußere Wand Teil eines umgekehrten Kegelstumpfes ist, der koaxial zur Schraubenachse liegt und dessen Grundfläche auf der Schraubenkopf-Oberfläche liegt, und bei der die mittlere Vertiefung einen spannlos geformten zylindrischen Führungsabschnitt aufweist, bekannt, bei der der Durchmesser der kreisförmigen Querschnittsfläche der mittleren Vertiefung gleich dem Durchmesser der Kopfflächen des den Schlitzen zugeordneten Kegelstumpfes ist und zwischen den Schlitzen etwa V-förmige Täler eingeprägt sind, und bei der die benachbarten Seitenwände der Schlitze und der Täler jeweils gemeinsame Kanten bilden, die auf einer zylindrischen Mantelfläche liegen, deren Durchmesser dem Durchmesser des Führungsabschnittes entspricht. Damit wird erreicht, daß der im Schraubenkopf befindliche Schlitz mit Hilfe einer Abdeckkappe verschließbar ist und daß ein sicherer Halt der Kappe innerhalb des Schlitzes bei jeder Schlitzgröße und Schlitztiefe (auf den Kappensitz bezogen) gewährleistet ist.

Ferner ist aus der DE-OS 31 13 831 eine Schraube mit kreuzförmig im Schraubenkopf angeordneten Schraubendrehschlitzen bekannt, die zur Aufnahme des Zapfens einer Abdeckkappe ausgebildet ist, wobei die seitlichen Innenflächen des den Zapfen aufnehmenden Hohlraumes und der Schraubendrehschlitze eine das Entformen von einem Formpreßstempel zulassenden Neigung aufweisen. Eine derartige Schraube ist so ausgebildet, daß an den seitlichen Innenflächen des Hohlraumes in axialer Richtung oder in Umfangsrichtung begrenzte Oberflächenbereiche vorhanden sind, die, bezogen auf die Schraubenachse, eine der Neigung dieser Innenfläche entgegengesetzte, eine Hinterschneidung bildende Neigung aufweisen oder parallel zur Schraubenachse verlaufen. Eine derartige Schraube soll auf einfache Weise durch Kaltfließpressen herstellbar sein und eine zuverlässige Haltung des Zapfens einer Abdeckkappe ermöglichen. Die Herstellung einer derartigen Schraube ist jedoch preßtechnisch nicht möglich.

0257664

Aufgabe der Erfindung ist, eine gattungsgemäße Universalschraube so weiterzubilden, daß ein optimaler Paarungseffekt zwischen Schraubendreher und Schraube und damit eine automatische Verschraubung möglich ist, die verhindert, daß der "cam-out-Effekt" eintritt, und die sicherstellt, daß eine maximale Flächenberührung zwischen Schraubendreher und Innenantrieb wie auch die Übertragung eines notwendigen Drehmomentes sichergestellt ist.

Gemäß der Erfindung wird diese Aufgabe mit den Merkmalen des Kennzeichens des Anspruches 1 gelöst. Weitere Ausgestaltungen der Erfindung sind Gegenstand der Unteransprüche.

Die Erfindung beruht auf der Erkenntnis, daß ein optimaler Paarungseffekt zwischen Schraubendreher und Schraube für die automatische Verschraubung von entscheidender Bedeutung ist; hierzu muß das Profil des Innenantriebes geometrisch so gestaltet werden, daß der "cam-out-Effekt" nicht auftritt. Auch ist der Innenantrieb flächenmäßig so auszunutzen, daß eine möglichst große Flächenberührung zwischen Schraubendreher und Innenantrieb erzielt wird. Hierbei bietet sich eine Vielkeilform, z.B. eine angenäherte Zahnradform an. Der "cam-out-Effekt" wird durch die zusätzliche besondere geometrische Formgebung des Innenantriebes oder des Schraubenziehers ausgeschaltet, und der Innenantrieb erhält eine konische bzw. zylindrische Form mit Ansatz mit einem Öffnungswinkel von z.B. 53°, um ein gutes Einschnäbeln des Schraubenziehers am Innenantrieb zu erzielen.

Der Kopf des Schraubenantriebs nach der Erfindung ist so ausgeführt, daß eine gute und sichere Übertragung des Drehmomentes mit dem Schrauber oder dem Schraubendreher über die Kupplung im Schraubenkopf gewährleistet ist. Der Schraubendreher schnäbelt und greift gut in die Kupplung ein, was für ein automatisches Schrauben von wesentlicher Bedeutung ist. Der Sitz zwischen Schraubendreher und Kupplung im Schraubenkopf ergibt ein geringes Spiel mit großem Flächenkontakt. Der Schraubendreher wird bei zunehmendem Drehmoment nicht aus dem Schraubenkopf herausgedrückt, wie dies bei allen Formen der Kreuzschlitzausführungen aufgrund der Geometrie der konischen Formen der Fall ist, die eine Keilwirkung bzw. den "cam-out-Effekt" ergeben. Weiterhin kann die Schraube beim Verarbeiten in horizontaler Richtung nicht von dem Schraubendreher abfallen. Die bekannten Kupplungsarten im Schraubenkopf, wie Längsschlitz, Kreuzformen, Vielkant (z.B. Torx), Innensechskant usw. können im Falle vorliegender Erfindung zum Einsatz kommen.

Bei bestimmten herkömmlichen Ausführungen z.B. mit Kreuzschlitz zur Aufnahme des Schraubendrehers, ist bei der Fertigung mit einem neuen Spezial-Prägestempel der "cam-out-Effekt" relativ gering gehalten, bei Verschleiß des Prägestempels hebt sich jedoch, obwohl das Normmaß noch eingehalten wird, bei Belastung bzw. bei Anwachsen des Drehmomentes der Schraubenzieher aus dem Innenantrieb, was zu den bekannten Nachteilen führt.

Mit dem erfindungsgemäßen Vorschlag wird die im Schraubenkopf vorgesehene Kreuzschlitzform zur Aufnahme des Schraubendrehers insoferne geändert, als der Öffnungswinkel von z.B. 53° nicht als Spitze ausläuft, sondern im Anschluß an den Winkel von 53° ein zylinderförmiger Ansatz mit vorgegebenem Durchmesser zur Verlängerung der Form vorgesehen ist, wobei die Steg- bzw. Flügelausbildungen in diesem zylindrischen Ansatz fortgesetzt sind. Damit ist es erstmals möglich, dem normalen Schraubendreher einen besseren Nachrutscheffekt zu geben. Er kann im Grunde nie aufliegen, und die Winkelfunktion zwischen Kreuzschlitz im Schraubenkopf und Kreuzschlitzform im Schraubendreher ist so modifiziert, daß z.B. der Spitzenwinkel, der bei der Schraube 52° beträgt, bei der Schraubendreherklinge nur etwa 50° oder weniger beträgt, und die Stegbreite der Flügel stets um einige Zehntel Millimeter schmaler ist, damit eine Abnutzung der Kreuzgelenkform kompensiert wird und ein stets gleichbleibend guter Sitz sichergestellt ist. In der weiteren Ausgestaltung der Erfindung können die Schraubendreherflügel im unteren Bereich um einige Grad unterschnitten sein, damit beim Anziehen der Schraube ein Kralleffekt erzielt wird, wodurch eine bessere Haftung erhalten und der "cam-out-Effekt" ausgeschaltet wird.

Am Schraubendreherende weist in Übereinstimmung mit dem Profil im Schraubenkopf die Klinge einen zylindrischen Verlängerungsansatz auf, der ebenfalls die entsprechenden Flügel bzw. Nuten hat, und der zusätzlich als Innenantrieb dient. Damit wird eine Kombination aus Kreuzschlitz und zylindrischem Ansatz geschaffen. In Verbindung mit einem Schraubendreher mit Zapfen ist die Übertragung höherer Drehmomente und Verbesserung des Sitzes bei Verschraubung in horizontaler Lage möglich. Durch höhere Flächenführung kann man eine Kreuznummer kleiner wählen und man erzielt ein besseres Preßverhalten. Durch die verbesserte Konstruktion des inneren Antriebes ist es möglich, kleinere Kreuzdimensionen zu wählen, die fertigungstechnisch günstiger hergestellt werden können.

Bei einer speziellen Ausführungsform der Erfindung ist der zylindrische Ansatz bzw. Zapfen des Schraubendreherendes so ausgeführt, daß am Ansatz eine größere Anzahl von Rippen als am konischen Oberteil vorgesehen ist. z.B. können am Oberteil vier Rippen und am Zapfen acht Rippen vorgesehen sein, wobei der Zapfen auch anstelle von Rippen eine Rändelung aufweisen kann. Dabei ist es erforderlich, daß diese entsprechende Form auch im Schraubenkopf vorhanden ist, und daß die Form im Schraubenkopf wie im Schraubendreherende paarig ist, damit eine einwandfreie Kupplung entsteht.

Am unteren Zapfen des Schraubendrehers sind beispielsweise die Stege nach Art eines Gewindebohrers unterbrochen. Sie bilden zusammen mit der Unterschneidung positive Zähne, die in den Stegen des Schraubenkopfes einen Krallefekt ergeben, zumindest aber einen besonders guten Haltekontakt bilden, damit der "cam-out-Effekt" möglichst ausgeschaltet wird. Mit einer derartigen Ausgestaltung einer Gewindesteigung läßt sich sogar ein Einzieheffekt erreichen, der den Schraubendreher in den Innenantrieb des Schraubenkopfes hineinzieht, wodurch der "cam-out-Effekt" vollkommen ausgeschaltet ist.

Das Antriebssystem, z.B. der Kreuzschlitz oder dergl., liegt im Schraubenkopf um die Höhe des zylindrischen Ansatzes tiefer. Dies macht erforderlich,, daß in dieser Zone auf eine Schwächung der Schraube geachtet werden muß. Bei einem Großteil der Schrauben, bei denen z.B. unterhalb des Kopfes ein Bund oder ein Konus gepreßt werden kann, treten jedoch keinerlei Probleme auf. Bei genormten Köpfen muß der jeweilige Zapfendurchmesser bzw. seine Länge genau mit dem Profil des Innenantriebes abgestimmt werden. Es hat sich in der Praxis jedoch gezeigt, daß bei einem Großteil auch der Normschrauben ein Bund oder Versenk unterhalb des Kopfes mit dem Außendurchmesser des jeweiligen Gewindes in keiner Weise stört und die Erfindung ohne weiteres eingesetzt werden kann.

Mit der erfindungsgemäßen Schraube wird ferner erreicht, daß die Innenform des Antriebes, die von z.B. vier Kreuzschlitz-Stegen oder -Flügeln und den vier V-förmigen Tälern gebildet wird, im Bereich der Flügelstege zylindrisch ausgebildet ist und bis zum Grund der Kreuzschlitztiefe weitergeführt ist. Diese von den Stegen bzw. Flügeln gebildete Segmentbohrung wird beispielsweise zur Aufnahme einer Kunststoffkappe mit Zapfen verwendet. Der Zylinderdurchmesser, der in der Kreuzschlitzform erscheint, ist an den Prägestempel des Preßwerkzeuges positiv ausgebildet, wodurch der Stempel stabiler und weniger bruchgefährdet wird. Diese Kernverstärkung am Stempel ist praktisch von wesentlicher Bedeutung, weil mit der neuen Form erheblich mehr Material verdrängt werden muß und bei Fehlen dieser Kernverstärkung die Standzeit sehr gering wäre.

Nach einer weiteren Ausführungsform der Erfindung sind die zwischen den Kreuzen verbleibenden Zonen in Profilform ausgebildet, z.B. als Vierkant, Achtkant, Vielkant oder dergl. Durch diese Profilausbildung entstehen Mitnehmerkanten-Kupplungsflächen als Kontakt und Mitnehmer für den Schraubenzieher-Bit, der dadurch eine Kupplung über das eigentliche Kreuz erhält. Als Zusatzkupplung dient die Form als Vielkeil, die in sich zylindrisch ist und nur eine fertigungsbedingte Konizität hat. Der Schraubenzieher-Bit hat die Gegenform der Kupplung im Schraubenkopf. Hat z.B. die Segmentbohrung eine runde, zylindrische Innenfläche, muß auch der Bit die gleiche Form haben. Einerseits wird dadurch der "cam-out"-Effekt sicher ausgeschaltet, zum anderen bleiben die Vorteile des Kreuzschlitzes erhalten, wobei der Kreuzschlitz in seiner Innenform eine weitere Vielkeilmitnehmerform integriert hat. In weiterer Abänderung der Erfindung kann die Kreuzform-Ausbildung nur als Anfasung von ca. 1 mm Tiefe ausgebildet sein, wobei sie wieder vorwiegend als Suchzentrierung für den Bit dient, und die eigentliche Vielkeilkupplung dann im Anschluß mit entsprechender Tiefe ausgebildet ist.

Eine vorerwähnte Kunststoffkappe ist zur Gewährleistung eines ausreichend guten Sitzes so ausgebildet, daß der Zapfen am Umfang Unstetigkeiten, z.B. noppenförmige Erhebungen, umlaufende Ringe oder dergl. besitzt, die beim Einsetzen der Kappe in die Bohrung einen nachgiebigen Halteeffekt ergeben. Ein entsprechender Feder-und Halteeffekt läßt sich auch dadurch erzielen, daß die Innenbohrung des Zapfens hinterschnitten ausgebildet ist bzw. die Wandung des Zapfens vom Öffnungsende zur Kappe hin kontinuierlich oder diskontinuierlich abnimmt, oder aber dadurch, daß der Zapfen etwa in Form einer Tonne ausgeführt ist, bei der der Mantel eine umlaufende Ausbauchung besitzt, wobei in diesem Falle der Zapfen zweckmäßigerweise hohl ausgebildet ist. Der innerhalb des Vielkeils entstehende, eingeschlossene Kreis ergibt eine ausreichende Kontaktfläche, um die Kunststoffkappe mit Preßsitz aufzunehmen. Dabei hat der hohle Kappenzapfen gegenüber der Bohrung ein Übermaß, das als Vorspannung in den hohlen Zapfen geht und den Preßsitz garantiert. Eine zusätzliche hohe Haltekraft wird dadurch erreicht, daß an dem runden Spannbacken Kreuzbalken (vorzugsweise vier über den Umfang versetzt) vorgesehen sind, die geschlitzt sind, die gegenüber den Kreuzflügeln im Schraubenkopf ein Übermaß haben und die sich unter Vorspannung in das Kreuz des Schraubenkopfes einpressen.

Nachstehend wird die Erfindung in Verbindung mit der Zeichnung anhand eines Ausführungsbeispieles erläutert. Es zeigt:

Fig. 1 einen Schraubenkopf nach der Erfindung, dessen Innenantrieb im Schnitt dargestellt ist,

Fig. 2 eine Aufsicht auf den Schraubenkopf nach Fig. 1,

Fig. 3 eine Schnittansicht des Schraubenkopfes nach Fig. 1 längs der Schnittlinie A-B,

Fig. 4 eine abgeänderte Ausführungsform eines Schraubenkopfes nach Fig. 1, im Schnitt,

Fig. 5 eine Aufsicht auf die Darstellung nach Fig. 4,

Fig. 6 einen Ausschnitt aus der Fig. 5 in vergrößerter Darstellung,

Fig. 7 eine weitere abgeänderte Ausführungsform eines Schraubenkopfes ähnlich der Fig. 4, im Schnitt,

Fig. 8 eine Ausführungsform eines Prägestempels zur Herstellung einer Schraube nach Fig. 1, in verkleinertem Maßstab,

Fig. 9 eine Aufsicht auf den Prägestempel nach Fig. 7,

Fig. 10 eine Ausführungsform eines Schraubendrehers herkömmlicher Art, teilweise im Schnitt,

Fig. 11 einen Schraubendreher nach der Erfindung zur Verwendung bei Schrauben nach Fig. 1,

Fig. 12 einen Schnitt durch den Schraubendreher nach Fig. 11 längs der Schnittlinie C-D,

Fig. 13 eine weitere Ausführungsform eines Schraubendrehers in einer gegenüber Fig. 11 abgeänderten Form,

Fig. 14 jeweils eine Kunststoffkappe mit Zapfen in drei verschiedenen Ausführungsformen a), b) und c),

Fig. 15 eine spezielle Ausführungsform einer Schraubenkappe, im Schnitt längs der Schnittlinie E-F nach Fig. 16,

Fig. 16 eine Ansicht der Schraubenkappe nach Fig. 15 von unten, und

0257664

Fig. 17 eine perspektivische Darstellung des Zapfens nach Fig. 16.

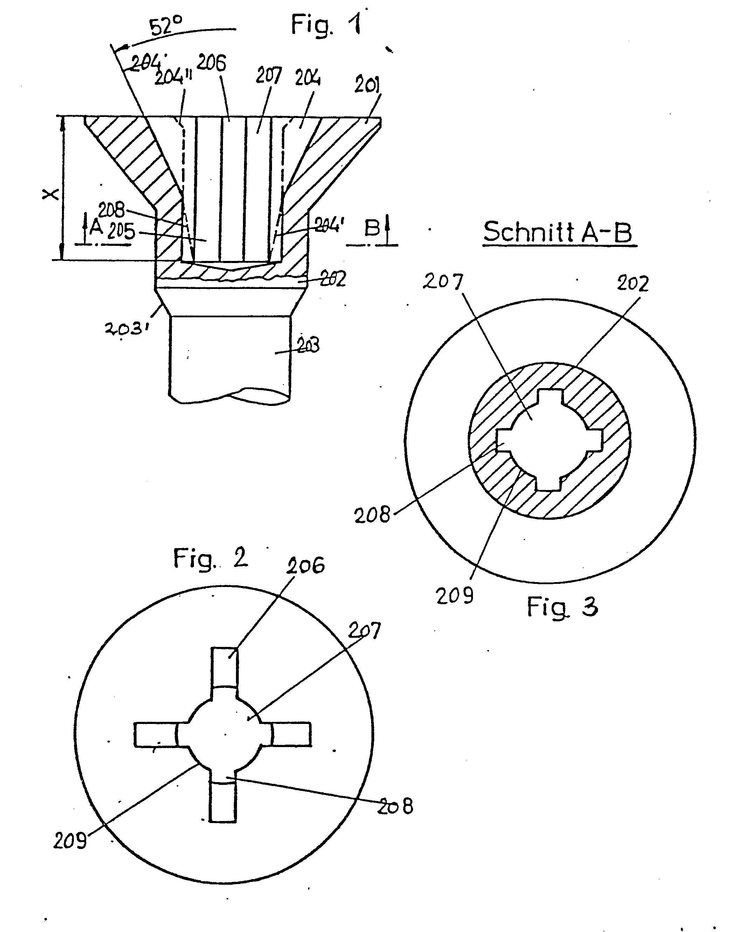

Der im Schnitt dargestellte Schraubenkopf 201 nach Fig. 1 weist einen nach unten gerichteten verlängerten zylindrischen Bund 202 auf, an den sich der Schraubensschaft 203 anschließt. Im Schraubenkopf 201 ist ein oberer Innenantrieb 204 ausgebildet, der in einen zylindrischen Innenantrieb 205 mit Zapfen übergeht. Das Flügelkreuz am Schraubenkopf 201 ist mit 206 bezeichnet, 207 ist die zylindrische Segmentbohrung, und 208 sind weiterlaufende Stege am Zapfen. Mit 209 ist der Umriß der Segmentbohrung 207 bezeichnet. Der Öffnungswinkel des oberen Innenantriebs 204 beträgt bei einer speziellen Ausführungsform der Verbindung 53⁰, der Innenantrieb 204, 205 hat eine Tiefe X; im Bereich der Tiefe X ist die zylindrische Segmentbohrung 207 von den Stegen 206, 208 unterbrochen. Der Profilform-Innenantrieb wird mit Hilfe eines Prägestempels 210 hergestellt. Alternativ ist in Fig. 1 gestrichelt dargestellt, daß der Innenantrieb 204 im inneren Abschnitt anstatt zylindrisch kegelstumpfförmig ausgebildet ist, wobei die gestrichelt angedeutete Schräge im unteren Teil in die Segmentbohrung 207 mündet. Eine weitere Variante der Form des Innenantriebes 204 ist gestrichelt mit 4´´ dargestellt.

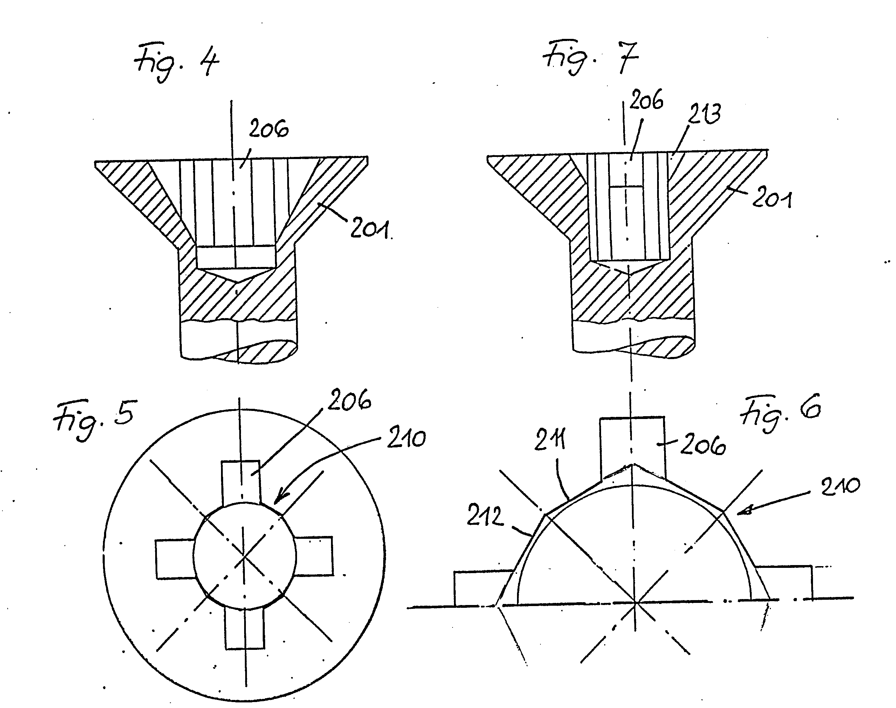

Bei der Ausführungsform nach Fig. 4 sind im Vergleich zu der Darstellung nach Fig. 1, 2 und 3 die zwischen den Armen des Kreuzes 206 gebildeten Zonen 210 in Profilform ausgebildet. Die Profilformen stellen beispielsweise einen Vierkant, einen Achtkant, einen Vielkant oder dergl. dar; beispielsweise ist in Fig. 5 eine Achtkant-Form gezeigt, deren Seiten mit 211, 212 bezeichnet sind. Wie in der Darstellung nach Fig. 7 angedeutet, kann bei einer anderen Ausgestaltung der Erfindung die Kreuzform-Ausbildung als Anfasung 213 von ca. 1 mm Tiefe geformt sein, die als Such-Zentrierung für den Schraubendreher dient; die eigentliche Vielkeil-Kupplung ist dann im Anschluß mit entsprechender Tiefe ausgeführt.

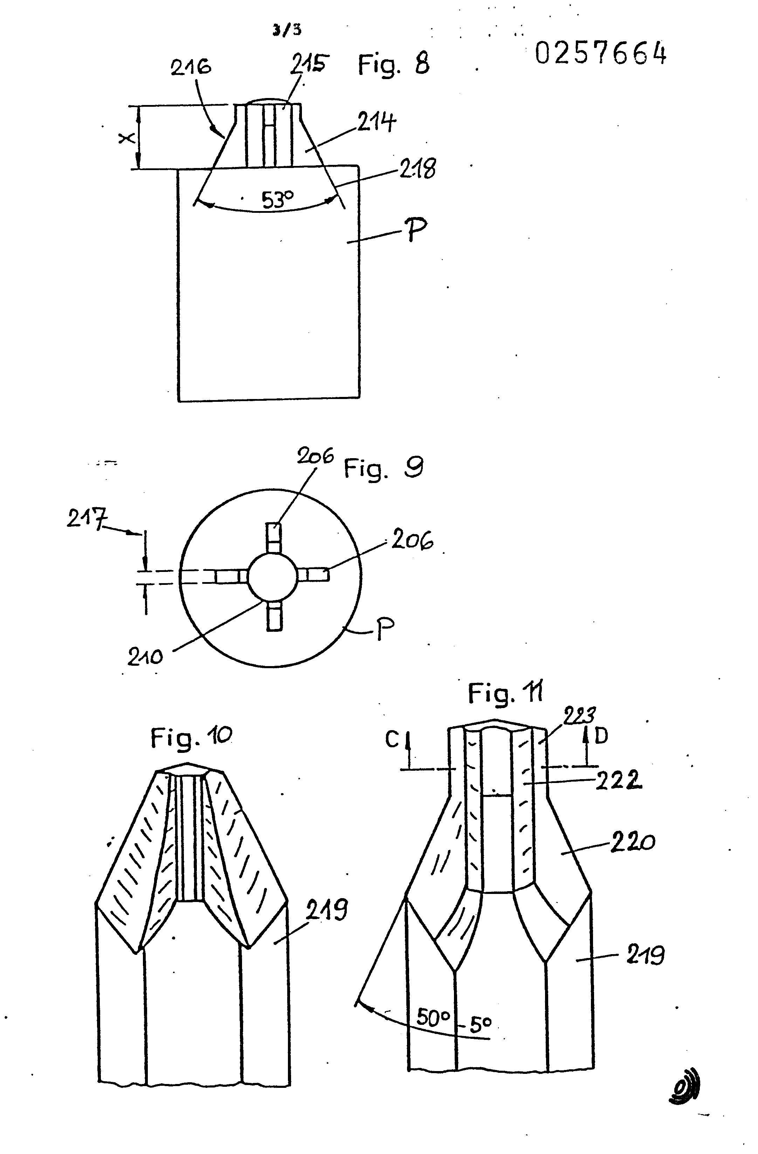

Der Prägestempel P (Fig. 8, 9) weist die Flügelstege 214 und den zylindrischen Kern 215 auf, die miteinander das Profil 216 des Prägestempels bilden. Die Breite der Flügelstege ist mit 217 bezeichnet. Mit 218 ist der Winkel von 53° angedeutet.

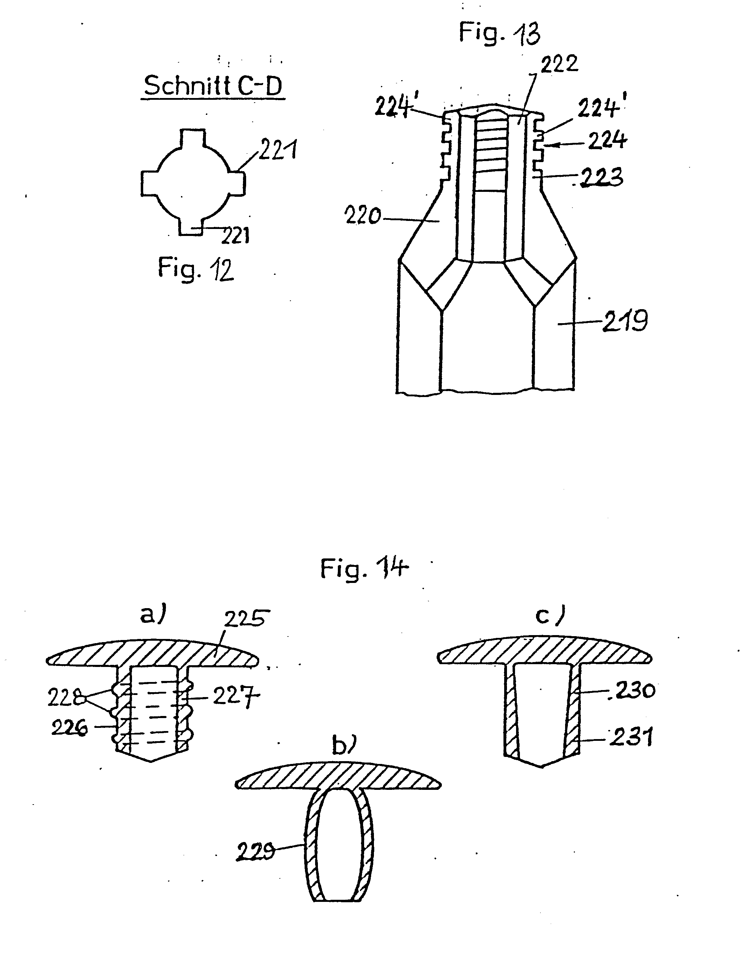

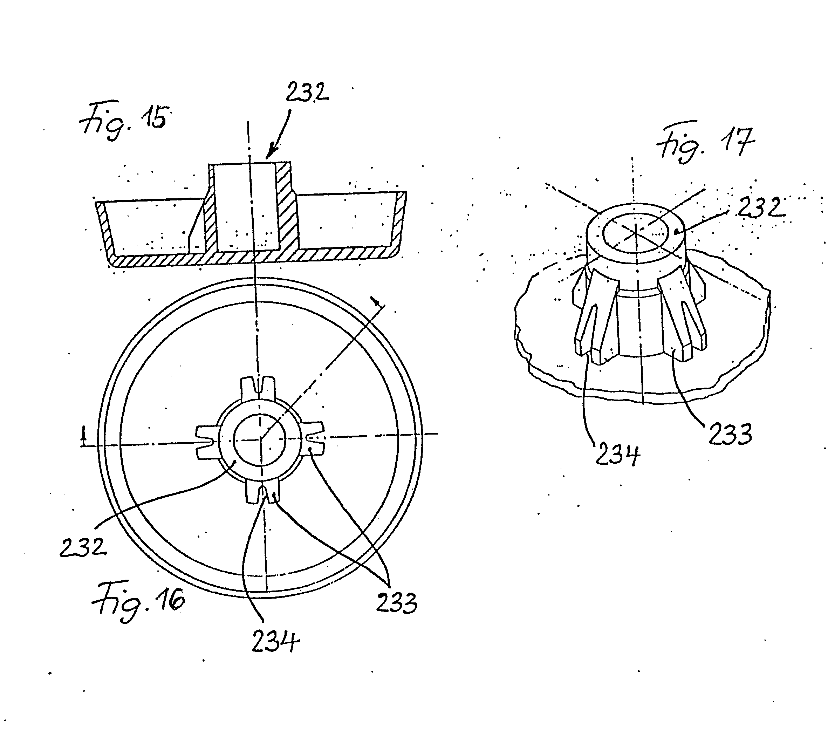

In den Fig. 10 bis 13 ist ein Schraubendreher 219 dargestellt, der in Fig. 10 von bekannter Ausführungsform ist, während die Darstellung nach den Figuren 11, 12 und 13 den Schraubendreher nach vorliegender Erfindung darstellt. Die Flügelstege 220 am Schraubendreher sind in einem Winkel von z.B. 50° zur Längsachse des Schraubendrehers ausgebildet. 201 stellen Unterschneidungen an den Stegen dar. Mit 222 ist ein zylinderförmiger Zapfen am Schraubendreher bezeichnet, der Stege 223 aufweist. Mit 224 ist ein trapezförmiges Gewinde mit positiven Zähnen 224 bezeichnet.

Die Kunststoffkappe mit Zapfen ist in drei Ausführungsformen in Fig. 3 mit a, b und c dargestellt. Die Kappe 225 weist einen zapfenförmigen Ansatz 226 auf, der hohl ausgebildet ist und von einer zylindrischen Wandung 227 geformt wird. Auf der Außenseite der Wandung 227 sind noppenartige oder ringförmige Erhebungen 228 vorgesehen. Bei der abgeänderten Ausführungsform nach b ist der Zapfen 229 tonnenförmig ausgebildet. Wahlweise können entsprechende Erhebungen am äußeren Umfang der Wandung 227 (ähnlich wie die Erhebungen 228) vorgesehen sein. Bei der weiteren Ausführungsform nach c ist der Zapfen 239 im Inneren hinterschnitten ausgebildet, so daß die Dicke der Wandung am Öffnungsende 231 bei zylindrischer Ausgestaltung der Außenfläche größer ist als am kappenseitigen Ende.

Die Kappe nach Fig. 15 und 16 weist am hohlen Kappenzapfen 232 symmetrisch um den Umfang versetzte Kreuzbalken 233 auf, die einstückig mit dem Zapfen 232 ausgebildet sind. Diese Kreuzbalken 233 sind jeweils mit einem Schlitz 234 versehen und weisen gegenüber den Kreuzflügeln im Schraubenkopf ein Übermaß auf.

Fig. 1

52°

204' 204" 206 207 204 201

X

208
A 205
204' B

202

203'

203

Schnitt A-B

207 202

208

209 Fig. 3

Fig. 2 206

207

209 208

Fig. 4

206

201

Fig. 7

206  213

201

Fig. 5

206

210

Fig. 6

211

212

206

210

**Fig. 8** 0257664

**Fig. 9**

**Fig. 10**

**Fig. 11**

Fig. 13

Schnitt C-D

Fig. 12

Fig. 14

a)

b)

c)

0257664

Fig. 17

Fig. 15

Fig. 16

0257664

# EUROPÄISCHER RECHERCHENBERICHT

**Europäisches Patentamt**

Nummer der Anmeldung

EP  87 20 1027

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 005 166  (KNOCHE) <br> * Figuren; Anspruch 1 * | 1 | F 16 B  23/00 <br> F 16 B  25/00 <br> F 16 B  37/14 |
| A | EP-A-0 012 441  (JAEGER GMBH) <br> * Figuren 1, 4 * | 1 | |
| A | DE-A-3 117 624  (BIERBACH) <br> * Figuren 1-4 * | 1-3 | |
| A | DE-A-3 113 831  (FÄSTER) <br> * Figuren * | 1,6,10 | |
| D,A | DE-C-3 016 890  (ELSENHEIMER) <br> * Figuren; Spalte 5, Zeile 14 — <br> Spalte 6, Zeile 19 * | 1-3,7 | |

RECHERCHIERTE SACHGEBIETE (Int. Cl.4)

F 16 B  23/00
F 16 B  25/00
F 16 B  37/00

Der vorliegende Recherchenbericht wurde für alle Patentansprüche erstellt.

| Recherchenort | Abschlußdatum der Recherche | Prüfer |
|---|---|---|
| BERLIN | 26-10-1987 | SCHAEFFLER C.A.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82